# EUROPEAN PATENT SPECIFICATION

(11) **EP 0 765 605 B1**
(45) Date of publication and mention of the grant of the patent: **24.04.2002**
(21) Application number: 95306832.7
(22) Date of filing: 27.09.1995
(51) Int. Cl.: A23G 1/18, A23G 3/02, A23L 3/30

(54) **Process for accelerating the polymorphic transformation of edible fats using ultrasonication**
Verfahren zur Beschleunigung der polymorphen Umwandlung essbarer Fette mittels Ultraschall
Procédé d'accélération de la transformation polymorphique des graines comestibles par ultrason

(43) Date of publication of application: 02.04.1997
(73) Proprietor: KRAFT JACOBS SUCHARD R & D, INC., Rye Brook, New York 10625 (US)
(72) Inventor: Baxter, John Frederic, D-81479 München (DE); Morris, George John, Bourn Cambridge CB5 7SX (GB); Gaim-Marsoner, Günther, D-85635 Höhenkirchen-Siegertsbrunn (DE)
(74) Representative: Eyles, Christopher Thomas

(56) References cited:
- WO-A-92/20420
- US-A- 5 209 879

## Description

This invention relates to a method for accelerating the polymorphic transformation of edible fats using ultrasonication and accelerating the transformation of unstable and semi-stable polymorphic crystals to stable forms.

The various effects of ultrasound on crystal nucleation and solidification of liquids are mediated by two physical processes: cavitation and acoustic streaming.

The progression of a sound wave through a liquid causes molecules to oscillate about their mean position. During the compressive part of the cycle the average distance between molecules decreases, while during the expansion or rarefaction the distances increase. In principle, if a sufficiently large negative pressure is applied to the liquid such that the average distance between the molecules exceeds the critical molecular distance necessary to hold the liquid intact, then the liquid will break down and voids or cavities will be created. Calculations of the pressure amplitude necessary to cause this "cavitation" m water suggests a value of 1500 atmospheres. In practice, however, cavitation occurs at much lower values, less than 20 atmospheres and usually about 1 atmosphere in water, due to the presence of "weak spots" in the liquid which lower its tensile strength. A major cause of such "weak spots" is the presence of dissolved gas: voids form, filled with gas or vapour, and produce cavitation bubbles which grow in size until the maximum negative pressure of the sound wave has been reached. In the succeeding compressive part of the wave, these cavitation bubbles will contract. Some collapse violently while others persist, leading to long-term bubble oscillations.

The presence of dissolved gas is important in inducing cavitation. It may be noted that the degassing of liquids leads to an increase in the cavitation threshold by a factor of about ten. It has also been observed that the presence of particulate matter, and more especially the occurrence of trapped vapour-gas nuclei in the crevices, lowers the cavitation threshold. The presence of cocoa solids and fine crystals in sugar in chocolate products, for example, may provide such sites.

To produce a void in a liquid requires a finite time. For sound waves with high frequencies, the time required to create a cavitation bubble may be longer than that available during the rarefaction cycle. For example, at 20 kHz, the rarefaction cycle lasts 25µs, attaining its maximum negative pressure in 0.025µs. As the frequency increases, the generation of cavitation bubbles becomes more difficult to achieve in the available time and greater power is required to ensure that the cohesive forces in the liquid are overcome. For example, ten times more power is required to make water cavitate at 400 kHz than at 20 kHz.

The threshold cavitation limit is also observed to increase with decreasing temperature. This is due to a reduction in the vapour pressure of the dissolved gases in the liquid and an increase in viscosity.

Acoustic streaming is one very noticeable manifestation of the rapid attenuation of ultrasound in air, where the fraction of energy lost per unit distance of propagation of the attenuating wave is so great that it cannot be dissipated immediately as heat and a flow or streaming motion results. The attenuation is proportional to the square of the frequency, and so the effect becomes important at ultrasonic frequencies. In liquids at the same frequencies the attenuation is likely to be about 1000 times less than in air, but at high input powers similar streaming motions can be seen. This is of relevance in solidification because the induced streaming motions can be important in local transport of cavitation bubbles, liquid and small nuclei. Thus, the effects of ultrasound on liquids, particularly liquids containing a variety of molecules having complex crystal structures such as oils, are complex.

### BACKGROUND ART

The effects of ultrasound on nucleation and solidification processes have been studied for a wide range of systems, particularly metallurgy, crystallization of solutes from a melt, and, to a lesser extent, nucleation of ice.

Nucleation by ultrasound has been demonstrated in a range of undercooled liquids. This phenomenon is thought to result from ultrasonically induced cavitation since the pressure increase due to the ultrasonic wave will not in itself be sufficient to induce nucleation. However, the collapse, rebound and oscillation of a cavity can cause intense negative and positive pressures in the surrounding liquid as well as creating changes in the amount of free surface. The mechanism of nucleation due to cavitation is that the rarefaction caused by collapse of the cavitation bubble is large enough to lower the local temperature by such an amount that it falls below the homogenous nucleation temperature and so produces nucleation. These sites provide a nucleus which may result in crystal growth in undercooled liquids. Ultrasound induces homogeneous nucleation; it occurs in filtered liquids in ultra-clean glassware. The kinetics of nucleation and of crystal growth and the resulting crystal morphology are similar to those described for homogeneous nucleation.

Application of ultrasound is an extremely efficient nucleating process for water and aqueous solutions. For example, ice may be nucleated by ultrasound in water undercooled by 0 4°C. By comparison, chemical nucleators such as ice nucleating bacteria; silver iodide and crystalline sterols require at least 2°C of undercooling to be effective. In water with significant undercooling throughout the sample, i.e., greater than 2°C undercooling, a rapid solidification of the system occurs with multiple nucleation sites and small grain size. By contrast, at low levels of undercooling (below 1 °C), a few large crystals are observed to grow. It may be stressed, that in water and in dilute aqueous solutions, once ice nucleation has occurred the rate of crystal growth is generally not limiting. By contrast in a complex system such as an oil, the crystal growth step may be limiting because of the presence of a large number of molecular species, complex steric requirements, and high viscosity.

When ultrasound is applied to a system undergoing solidification, a reduction in the average size of crystals occurs, a process known as grain refinement or grain multiplication. This phenomenon is well documented in materials science and metallurgy where a grain structure of fine equi-axed crystals is usually required for optimal mechanical properties. In cooling from the wall of the mould, dendritic structures usually form close to the wall aligned parallel to the direction of heat flow, with a spacing that is finer with higher rates of heat extraction. This columnar growth gives way to equi-axed growth away from the wall, and much effort in the field of materials science has gone into devising methods of suppressing the columnar growth and promoting the growth of equi-axed crystals. One common way of achieving this is to seed the material with inoculants which provide multiple sites for crystal growth.

An alternative method of grain refinement is to enhance the natural formation of equi-axed grains which occurs primarily by dendrite remelting, by use of physical disturbances such as ultrasound to produce localized thermal fluctuations. This effect can be achieved in the absence of cavitation by acoustic streaming, but cavitation bubbles can also be important in providing additional heterogeneous nucleation sites in regions where there is constitutional supercooling.

"Constitutional supercooling" is observed when supercooling not arising simply from a decrease in bulk temperature is seen. This occurs because when liquids of mixed composition are nucleated, the formation of a solid phase removes molecules from the system. If this happens, at the surface of a growing crystal a high concentration of solute may be generated which inhibits crystal growth into the bulk liquid, and some of this bulk may supercool. This is often observed in oils because they contain a large number of molecular species, complex steric requirements, and high viscosity.

There is also evidence that ultrasound may cause grain refinement by fragmentation of existing crystals. The timing of the application of ultrasound during crystal growth seems to be critical in producing this effect; the crystals are most sensitive to disruption during rapid growth.

Acoustic streaming induces mixing in fluids which may significantly modify solidification in a number of ways such as mixing at the solid/liquid interface and mixing of crystals into the liquid. A build up of solute concentration or solids may occur at the face of an advancing crystal front or dendrite tip. This increase in local concentration reduces the rate of propagation of the front and bulk liquid further from the front may then undercool (a condition known as constitutional supercooling mentioned above). Mixing, induced by ultrasound, at the solid/liquid interface reduces this concentration and increases the rate of crystal propagation.

Alternatively or in addition, following nucleation or grain refinement as described above, the dispersion of seed crystals into the liquid will improve uniformity of crystal size and reduce constitutional supercooling.

These effects of ultrasound on solidification have been suggested for several lipid compositions. In U.S. Patent No. 5,209,879, Redding disclosed a method and apparatus for transforming waxes. Waxes, particularly tristearin, were melted and then subjected to force from a piston or ultrasound to transform them from α- to β-crystal form (column 1, lines 63 to 69 and column 3, lines 15 to 20). The time needed to transform tristearin by means of piston strokes required only a few seconds, while the ultrasonic transformation required 10 minutes (column 8, lines 11 to 15).

In German Offenlegungsschrift No. 3,229,937 to Eckart and Brandt, fatty compositions such as suppositories or cocoa butter were treated with ultrasound before, during or after solidification. In International Patent Publication No. WO 92/20420 to Acton and Morris, liquids (including lipids) at up to 1 °C below their melting point were subjected to ultrasound, preferably in the frequency range of 20 to 40 kHz to induce formation of large crystals (500 microns) in the solidified product (Abstract, lines 3 to 5).

Cocoa butter consists mainly of triglycerides which are a mixture of POS (1-palmitoyl-2-oleyl-3-stearoylg]ycerol), SOS (2-oleoyl-1,3-distearoylglycerol) and POP (1,3-dipalmitoyl-2-oleoylglycerol). It is somewhat variable in composition, depending upon the type of cacao bean from which it is obtained. Typically it contains 36% POS, 26% SOS and 16% POP. In common with certain other fats cocoa butter exhibits polymorphism. Thus it can exist in different polymorphic forms, that is to say solid phases of the same chemical composition that differ among themselves in crystalline structure but yield identical liquid phases upon melting.

In the textbook *Industrial Chocolate Manufacture and Use* (second edition) edited by S.T. Beckett, published by Blackie Academic and Professional (1994), pages 156 and 157, six different polymorphic forms of cocoa butter are mentioned. These are designated Forms I to VI or by Greek letters. Their properties are set out in Table I below.

**TABLE 1**

| Form | m.p. °C [°F] | Chain packing |
|---|---|---|
| I β'₂ | 16-18 [61-67] | Double |
| II α | 21-22 [70-72] | Double |
| III Mixed | 25.5 [78] | Double |
| IV β'₁ | 27-29 [81-84] | Double |
| V β₂ | 34-35 [93-95] | Triple |
| VI β₁ | 36 [97] | Triple |

The convention which ascribes the nomenclature Forms I to VI of Table 1 is further described by Wille, R.L. and Lutton, E.S. *J. Am. Oil Chem. Soc*, 43 (1966) 942, whilst the convention using the Greek letters of Table 1 is explained by Larsson, K. *Acta Chem. Scand*., 20 (1966) 2255-2260. On page 183 of the same textbook it is said that, according to Vaeck, S.V. "Cacao butter and fat bloom", *14th PCMA Production Conf*., Pennsylvania (1960) the polymorphic forms of cocoa butter are as set out in Table 2.

**TABLE 2**

| Form | Crystallizes | Melting range | Stability | Contraction |
|---|---|---|---|---|
| γ | Under 62.5°F (16.9°C) | Up to 62.5°F (16.9°C) | Unstable | |
| α | From γ | Up to 75°F (23.8°C) | Unstable | 0.060 ml/g |
| β₁ | 62.5°F-72.5°F (16.9°C-22.5°C) | 59°F-85°F (15°C-29.4°C) | Semi-stable | 0.086 ml/g |
| β₂ | - | Data not available | - | |
| β | 72.5°F-92.5°F (22.5°C-33.6°C) | 68°F-95°F (20°C-35°C) | Stable | 0.097 ml/g |

However, in the original paper by Vaeck, S. Victor as published in *Twenty Years of Confectionery and Chocolate Progress*, The AVI Publishing Company, Inc., Westport, Connecticut (1970), Chapter 15, pages 123 to 155, he describes the forms as γ, α, β', β" and β; in this specification the term β polymorph is used as described by Vaeck, S. Victor in this last mentioned publication. The α form has a hexagonal crystal structure while the β' polymorph has an orthorhombic crystal structure and the β polymorph has a triclinic crystal structure. The β polymorph is the most stable crystalline form that can be produced by tempering, even though it is reported that there is a more stable form still which is formed after long storage, i.e. the polymorph designated VI or β₁ in Table 1 above. The β polymorph exhibits much smaller crystals than the unstable polymorphs, such as the α, β', β" or γ polymorphs.

Many modem chocolate plants for molding, enrobing or shell production with large outputs are provided with automatic temperers typically constructed in the form of tubular or plate heat exchangers with each section controlled thermostatically. Chocolate is delivered from the storage tanks and is subjected to the cooling and warming cycles summarized above. Because time, temperature and processing conditions are critical for proper chocolate tempering, many tempering devices are complex and expensive to purchase and operate.

In another method of tempering, solid chocolate shavings are added as seed crystals to liquid chocolate at a few degrees under its melting point, e.g. for dark chocolate at 32-33°C. This is a particularly good technique for a small confectionery manufacturer that does not produce its own chocolate. However, the shavings are sometimes difficult to disperse and may cause lumps in the finished product. Lumps travelling in a pipe system can cause serious trouble as, even if screens are provided, these may become blocked. Even so, some chocolate technologists advocate this method of tempering and even go to the length of preparing their chocolate seed by cooling well-grained chocolate in very thin layers on an enrober band. It is claimed that the nature of this seed encourages the formation of a maximum of stable forms of cocoa butter in the chocolate.

The purpose of tempering is to obtain a large number of the smallest possible β crystals. Besides bloom resistance, successful tempering leads to a number of desirable characteristics in chocolate including good flow properties, rapid solidification during cooling, maximum contraction (for ease in demolding), high gloss, and resistance to fat migration. In well-tempered cocoa butter, the released crystallization heat and the cooling rate are in equilibrium.

Control of the polymorphic forms in cocoa butter is further complicated by the presence of other fats such as milk fat. Blending milk fat into cocoa butter to form milk chocolate and adding nut oils such as hazelnut and the like are common practices in the formulation of various confectionery products.

The complex effects observed in cocoa butter blends further complicate the development of tempering procedures for the manufacture of chocolate products.

It would be desirable to have other methods for accelerating the polymorphic transformation of edible fats to achieve stable crystal structures.

### DISCLOSURE OF THE INVENTION

It is an object of the invention to provide a new method for accelerating the polymorphic transformation of edible fat compositions that contain fats capable of polymorphic transformation.

It is a further and more specific object of the invention to accelerate the transformation of unstable and semi-stable polymorphic crystals to stable forms, thus providing stable edible fat compositions.

These and other objects are achieved by the present invention, which provides a method for accelerating the polymorphic transformation of edible fat compositions containing fats capable of polymorphic transformation. Edible fat compositions are treated by undercooling the composition by at least about 4°C, and in many embodiments by at least about 5°C, and exposing it to ultrasonic energy for a time and at a frequency sufficient to induce nucleation of stable polymorph crystals in the fat without exceeding the melting point of the stable polymorph crystals.

Typical edible fat compositions which can be treated by the method of the invention include butterfat, ice cream, chocolate compositions, margarines, and yoghurt. Chocolate compositions contain cocoa butter and stable β crystals are generated therein by application of the method; some chocolate compositions contain other oils or fats such as milk fat or nut oils, such as hazelnut oil. Besides cocoa butter a chocolate composition will also contain chocolate solids. It may further include one or more cocoa butter equivalents or cocoa butter substitutes. It may additionally or alternatively include so-called low caloric fats, such as those described in U.S. Patents No. 5,258.197 or in U. S. Patent No. 5,275,835. A typical chocolate composition contains at least 10% cocoa liquor, at least 25% by weight fat, mainly cocoa butter, and not more than 2% to 5% of vegetable fat derived from sources other than cacao bean.

Ultrasonic energy is typically energy applied at a frequency above about 16 kHz, e.g. from about 20 kHz up to several thousand MHz, e.g. up to about 2000 MHz. In the method of the invention the ultrasound energy is preferably applied in static or continuous flow conditions, typically at a frequency of from about 16 kHz, preferably at least about 20 kHz, to up about 100 kHz or more, for example up to-about 20 MHz or more.

The ultrasonic energy can be applied continuously or in the form of pulses. It can be applied to a continuous chocolate flow or to chocolate in static condition, for example to chocolate which has been poured into a mold.

In some cases, from about 9 kJ/kg to approximately 20 kJ/kg ultrasonic energy is employed.

Fat products so formed are heat-resistant and shelf-stable at room temperature (about 20° to about 25°C) for at least a year.

### INDUSTRIAL APPLICABILITY

The invention is based upon the finding that fat-based masses containing fats capable of polymorphic transformation which are cooled and exposed to short ultrasonic power pulses exhibit desirable properties including stability, heat resistance, and less sensitivity to process deviations.

In the practice of the invention, compositions containing fats capable of polymorphic transformation are undercooled and then ultrasonicated. Typical fat-containing compositions include but are not limited to those containing cocoa butter and/or the cocoa butter mimetic. Alternatively the method of the invention can be used to treat a butterfat, an ice cream, a margarine or a yoghurt.

Cocoa butter "mimetics" are fats that exhibit sharp melting profiles similar to cocoa butter and/or contain a complement of symmetrical triglycerides similar to cocoa butter, or a similar fat that may or may not have a cocoa butter component. The composition may also contain other edible oils or fats typically incorporated in confections such as milk fat or nut oils such as hazelnut oil, walnut oil, pecan oil, peanut oil, and the like, or mixtures thereof. The composition may thus comprise dark chocolate, milk chocolate, white chocolate, chocolate-flavoured compounds or coatings, or a mixture thereof. The method is used to cause the confectionery fat or a confectionery composition comprising fat and a sweetener to undergo polymorphic trans formation.

The fat-based composition is undercooled prior to application of ultrasonic energy. "Undercooling" is the cooling of liquids below their freezing point without onset of crystallization; it is a metastable condition and the amount observed in a system is dependent on a number of variables including volume, purity, freedom from vibration, cooling rate, and the like. In the practice of the invention, the fat-containing composition is undercooled by at least about 4°C, typically between about 4°C and about 12°C, more narrowly between about 4° and about 6°C.

The melting point of the β polymorph is first measured, for example by careful hand tempering of the chocolate or other fat-based composition to be processed followed by differential thermal analysis (DTA). Provided that the hand tempering has been carried in optimal fashion, the resulting conventional DTA plot will exhibit a trough with a minimum at a temperature corresponding to the melting point of the β polymorph. Once the melting point of the β polymorph has been measured it is readily possible to determine the temperature to which the composition should be undercooled prior to subjection to ultrasonic treatment.

In the practice of the invention, ultrasonic energy is applied in static or continuous flow operations typical of ultrasonications such as that described in general terms in U.S. Patent No. 5,209,879 to Redding for the treatment of waxes, German Offenlegungsschrift No. 3,229,937 to Eckart and Brandt for the solidification of fats, or International Patent Publication No. WO 92/20420 to Acton and Morris, discussed above, except that in the method of the invention compositions are undercooled as described above and conditions are modified to produce small stable crystals, e.g., β crystals, in the composition. The energy is preferably supplied continuously or as pulses at a frequency that typically vary from about 20 kHz to about 20 MHz, preferably from about 20 kHz to about 2 MHz, even more preferably from about 20 kHz to about 100 kHz. In a static system pulses can be employed having a duration of from about 0.1 to about 10 seconds, preferably about 1 to about 5 seconds. In a continuous flow system ultrasonic energy can be supplied continuously or in pulses using a frequency of, for example, from about 20 kHz up to about 20 MHz, typically from about 20 kHz to about 2 MHz, and preferably from about 20 kHz to about 100 kHz. Pulse lengths can vary within wide limits, e.g. from about 0.1s up to about 10s, preferably from about 0.5s to about 4s. Similarly pulse intervals can also vary within wide limits, for example from about 0.1s up to about 60s, preferably from about 0.5s to about 5s. In one preferred method, pulses, each 2s long, are applied at 30 second intervals. The overall energy input into the fat containing composition typically varies from about 5 kJ/kg to about 50 kJ/kg, preferably from about 8 kJ/kg to about 20 kJ/kg. In some embodiments, approximately 9 to approximately 20 kJ/kg ultrasonic energy are employed. Care must be taken not to raise the energy input to so high a level that the undercooled mass is heated above the melting point of the desired stable β polymorph.

It is an advantage of the invention that ultrasound produces nucleation in a controlled manner rather than as a probabalistic event. The method of the invention produces fat products that are stable, preferably for a year or more when stored at room temperature (about 20° to about 25°C). Products so treated are less sensitive to process deviations than those obtained using conventional tempering methods, and reworking in production (enhancing line output, cost savings, and freshness). The products are heat-resistant and exhibit superior texture.

The application of ultrasonic energy to fat compositions as described herein allows the replacement of standard tempering machines (e.g., plate or screw tempers and scraped surface heat exchangers). It is an advantage of the invention that the method eliminates a heating step that is part of prior art tempering processes. By applying ultrasound to a continuous surface-heat exchanger (with or without scraping unit), fat masses can be made that exhibit the required flow properties for various applications as well as other desirable properties. Ultrasound can be integrated into commercial processes such as those involving pipes and/or heat exchangers, and can be used on molded products.

It is a further advantage of the invention that significant energy savings are observed in the practice of the method. In some cases, where polymorphic conversion occurred, only 7 to 30% of the energy was required compared to conventional tempering methods.

The following examples are presented to further illustrate and explain the present invention and should not be taken as limiting in any regard. Unless otherwise indicated, all parts and percentages are by weight, and are based on the weight at the particular stage of processing being described.

### Example 1

The effects of ultrasound on nucleation and crystal growth on bulk samples are examined in this example.

In this Example and the ones that follow, the differential thermal analysis (DTA) peak temperatures of the triglyceride polymorphs contained in the cocoa butter and Milka® chocolate (which contains cocoa butter, milk fat and hazelnut oil used were as set out in Table 3:

**TABLE 3**

| | γ | α | β" | β' | β |
|---|---|---|---|---|---|
| cocoa butter | 17 | 23.6 | 28 | 33 | 35 |
| Milka® | 17 | 21 | 25 | 28 | 30 |

The experimental procedure involved melting 300 g cocoa butter or another chocolate product and warming to 40°C in a stainless steel pan. The cocoa butter was cooled to a pre-set temperature of 29°C, 30°C or 33 °C (determined using the data of Table 3) while being stirred vigorously. The sample was then held at this temperature for 10 minutes and a reference sample extracted and stored isothermally. The remaining cocoa butter then underwent ultrasonic treatment. Some treatments also involved reheating the treated sample.

Following the ultrasonic treatment, the samples were transferred to a controlled rate cooling apparatus and cooled through a standard hardening cycle by cooling to 15°C at 0.5°C per minute and then reheating to 23°C at 0.5°C per minute.

Analyses using DTA were then carried out. A standardized DTA procedure was adopted to allow for direct comparison between different samples (in this Example and those that follow). As used herein, the term "differential thermal analysis" (DTA) involves the detection and measurement of changes of state and heats of reaction in solids and melts, by simultaneously heating two samples of identical heat capacities and noting the difference in temperature between them, which becomes very marked when one of the two samples passes through a transition temperature with evolution of absorption of heat but the other does not. A small sample (typically 20 mg) was extracted at 4°C and placed in a DTA pan also at 4°C. This was then placed into the DTA chamber set at 10°C. The sample was left for a few minutes to allow it to reach thermal equilibrium with the chamber. Once this was achieved, the sample was heated to 40°C at 2°C per minute. In some studies the polymorphic composition immediately following an experimental treatment, and before hardening, was determined by rapidly cooling the sample within an analytical pan. This rapid rate of cooling essentially vitrifies any non-crystallized cocoa butter and the original crystal composition can then be determined on warming within a DTA pan.

The DTA traces indicated that the β' polymorph was formed.

Experiments were also carried out with Milka® milk chocolate (containing milk fat and hazelnut oil as well as cocoa butter as described above), in which the β polymorph has a melting point of 30.5°C. In tests below this temperature and above 29°C both sonicated and reference samples exhibited random nucleation, whereas below 28°C temperature preferential nucleation occurred in the sonicated sample. The DTA analysis shows that at 28°C (2.5°C of undercooling) a polymorph with a melting point at 28.5°C (β' polymorph) is produced in the sonicated sample after application of short pulses of ultrasound. Rather surprisingly, it was found that samples hardened from this ultrasonic treatment shrank in a mold, were glossy, and displayed no evidence of bloom after 9 weeks storage at 20°C.

At temperatures below 26°C (greater levels of undercooling, 6°C) the β form is produced in the sonicated sample. This occurs either by direct nucleation from the liquid or by conversion from a lower polymorph. Direct hardening of a sample sonicated at 26°C produced material which exhibited little shrinkage in the mold, was glossy in appearance and, following 9 weeks storage at 20°C, displayed no evidence of bloom. DTA carried out when the sample was cooled rapidly from 26°C and then analyzed confirmed that the 26°C ultrasonic treatment resulted in the formation of β crystals, while in the control (non-sonicated sample) β crystals were not detected.

It was also possible to reheat the sample by application of ultrasound. Typical DTA curves for Milka® samples produced in this manner were compared against hand-tempered samples and found to be very similar. The peak value for the hand-tempered samples was determined to be 29.4°C and, for the ultrasonic-tempered material, 29.7°C. Samples hardened from this ultrasonic treatment shrank in the mold, had a high gloss, and displayed no evidence of bloom after 9 weeks storage at 20°C.

Some other chocolate products were also briefly investigated to determine the suitability of ultrasonic nucleation to these products. The products were praline filling, and Velma® chocolate For both the praline filling and the Velma® chocolate it was possible to nucleate the β polymorph by applying ultrasound at 25° and 28°C, respectively.

### Example 2

Continuous processing of chocolate products was investigated in a modified scraped surface heat exchanger, in which ultrasound was transmitted to cocoa butter, via the pipe walls and the coolant, from ultrasonic transducers fixed to the outer walls of the coolant housing. Cocoa butter was pumped from a sump at 40°C through a cooling coil and passed through the ultrasonic device before returning to the sump.

The modified scraped surface heat exchanger was operated mostly without the scraper, and because of its built-in cooling system it was possible to apply ultrasound continuously to the cocoa butter. The product sump was set to 34°C and the coolant temperature to 10°C, resulting in an outflow temperature of 31°C. DTA traces for this experiment show that while random nucleation occurred in the reference sample, the sonicated samples produced the β polymorph. When scraping was introduced similar results were obtained, and the β polymorph was produced. The ultrasonic energy transmitted into the cocoa butter was estimated to be about 60 kJ/kg. In control samples with no applied ultrasound, β crystals cannot be detected.

### Example 3

This example describes molding experiments.

The molding procedure involved pouring molten cocoa butter (or another chocolate product) at 40°C into a mold, also held at 40°C, and then cooling at 0.5°C per minute to 4°C. During cooling pulsed ultrasound was applied from the melting point of the β component to 10°C below it. At the end of the cooling cycle, the product was stored at 4°C. Reference samples were produced by repeating the above procedure with no application of ultrasound.

The DTA trace for the cocoa butter sample produced in the sonicated mould indicated that the β polymorph had been formed. The ultrasonic energy transmitted into the cocoa butter was estimated to be about 13 kJ/kg.

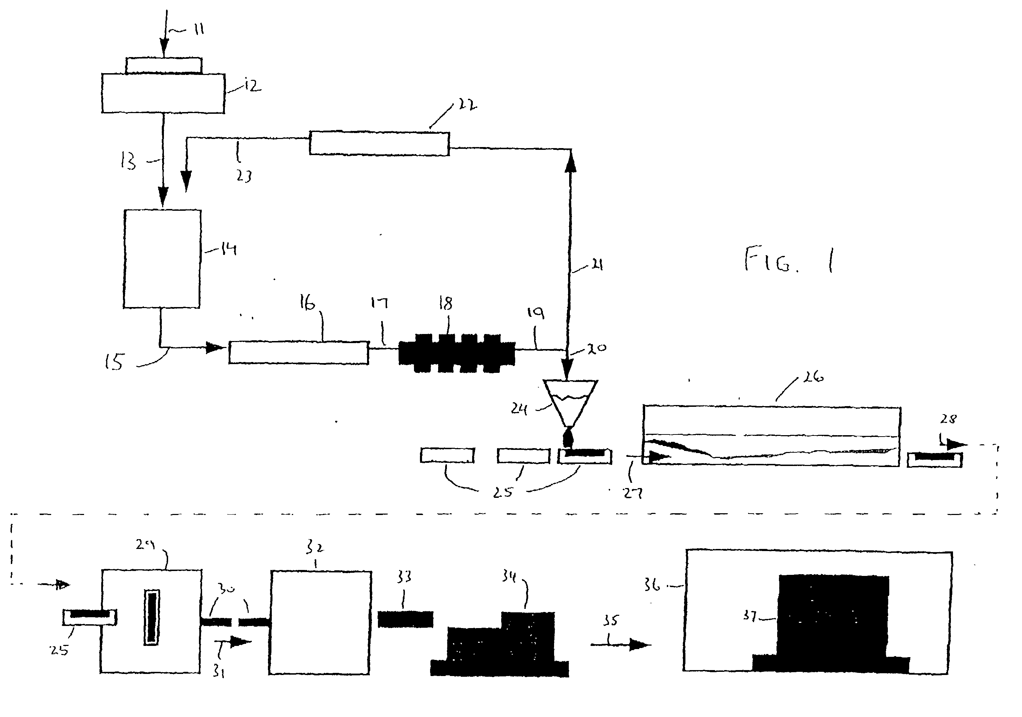

Figure 1 illustrates part of a first form of chocolate plant utilising the method of the invention. In this plant the ingredients for making a milk chocolate having the same composition as conventional Milka® chocolate, including cocoa butter, milk fat and hazelnut oil, are first mixed in a mixer (not shown) in conventional manner and then the resulting paste is fed to a refiner (not shown), for example a roll refiner. In the refiner the chocolate paste is refined in conventional manner to impart the desired texture of smoothness. The resulting refined chocolate is supplied in friable fleck form, as indicated by line 11, to a conche 12 The resulting liquid chocolate is then fed, as indicated by line 13, to a tank 14 from which it is passed in line 15 to a precooler 16 in which it is undercooled under carefully controlled cooling conditions by from about 4°C to about 5.5°C below the melting point of the β polymorph of Milka® chocolate (30.5°C), i.e. to a temperature of from about 26.5 °C to about 25°C. From the precooler 16 the undercooled chocolate passes on in line 17 to an ultrasonication section 18 in which it is submitted to continuous ultrasonic treatment at an ultrasonic frequency within the range of from about 20 kHz to about 100 kHz or with pulses of such ultrasonic energy having a duration of from about 0 1s up to about 10s. This treatment results in imparting about 9 kJ/kg to about 20 kJ/kg to the flowing chocolate, provided that an appropriate chocolate flow rate is selected. The resulting ultrasonically treated chocolate typically contains from about 3% by weight to about 10% by weight of its fat content of crystals of the β polymorph. It flows on in line 19, part passing on to line 20 while the remainder is recycled in line 21 to reheater 22 and thence via line 23 to tank 14.

The chocolate in line 20 passes on to a depositor 24 which fills a succession of bar-shaped molds 25. The filled molds 25 then travel on into cooling tunnel 26, as indicated by arrow 27. In passage through cooling tunnel 26 the filled molds 25 are subjected to carefully controlled cooling conditions to effect solidification of the chocolate bars. The cooled bars, still in their molds 25, pass on as indicated by arrow 28, to a demolding unit 29. The bars 30 continue, as indicated by arrow 31, to a wrapping unit 32. Boxes 33 of wrapped bars are palletized as indicated at 34 and taken, as indicated by arrow 35, to storage in warehouse 36 in which the loaded pallets are indicated at 37.

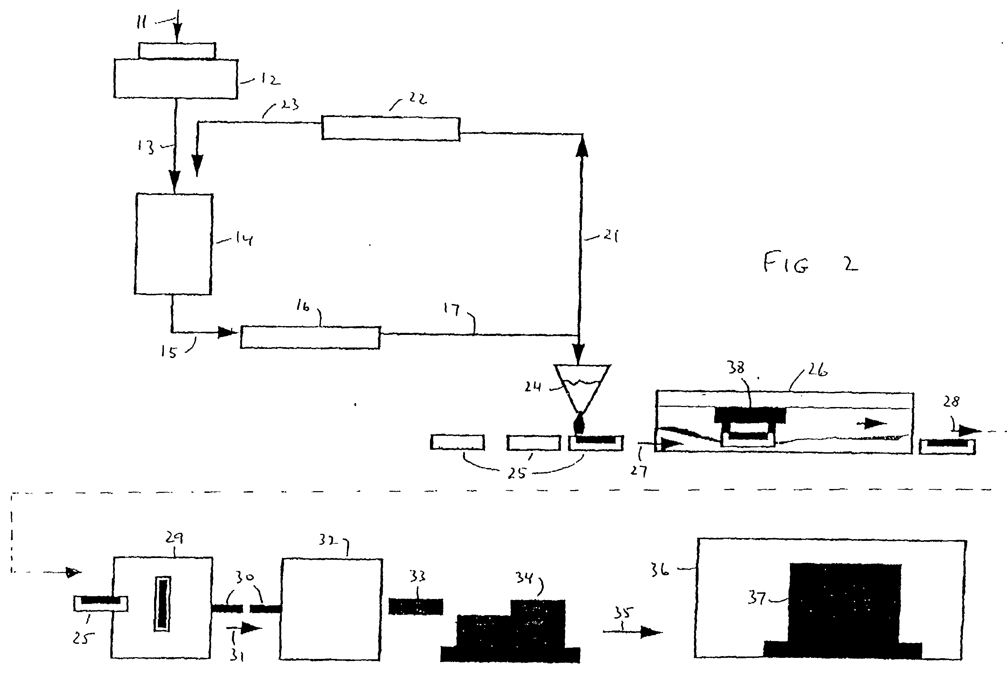

In Figure 2 like reference numerals have been used to indicate features of the plant of Figure 2 that are the same as the corresponding features of the plant of Figure 1. In the plant of Figure 2 cooling section 16 reduces the temperature of the Milka® chocolate composition to about 29°C and ultrasonication section 18 is omitted so that the flow from 17 is divided into the flows in lines 20 and 21. Instead ultrasonic transducers 38 are positioned within cooling tunnel 26 at a point in the cooling tunnel at which the chocolate is undercooled by from about 4°C to about 5.5°C, i.e is at a temperature of from about 26.5°C to about 25°C, and are arranged to apply ultrasonic energy at a frequency of in the range of from about 20 kHz to about 100 kHz, e.g. about 50 kHz, in appropriate quantity to the filled molds 25 as they pass underneath through the cooling tunnel 26. The amount of ultrasonic energy is controlled so as not to raise the temperature sufficiently to melt the β polymorph crystals and preferably so as not to raise the temperature of the chocolate above about 29°C.

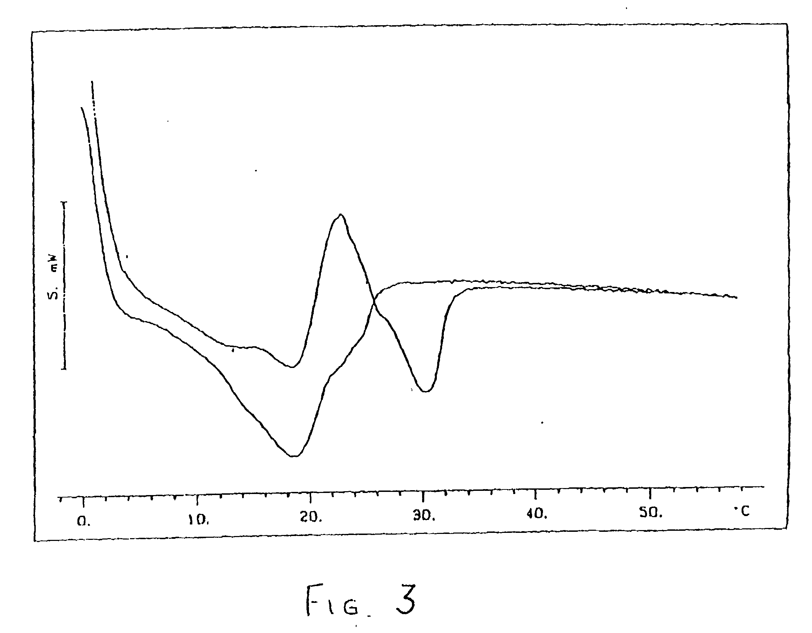

Figure 3 is a differential thermal analysis plot of a sample of Milka® chocolate which has been undercooled to 26°C, as well as a corresponding plot of a similar sample which, after undercooling to 26°C, is subjected to ultrasonic treatment. In the former case the plot shows a minimum at about 19°C indicating formation of α polymorph crystals. In contrast, the ultrasonicated sample indicates a trough at 31°C, which is indication of the formation of the β' polymorph.

## Claims

1. A method for accelerating the polymorphic transformation of an edible fat composition containing a fat capable of polymorphic transformation to a β polymorph comprising undercooling said composition by at least about 4°C and exposing it to ultrasonic energy for a time and at a frequency sufficient to induce nucleation of stable β polymorph crystals in said fat without exceeding the melting point of the stable β polymorph crystals.

2. A method according to claim 1, wherein said edible fat composition is a chocolate composition comprising cocoa butter.

3. A method according to claim 2, wherein said chocolate further comprises hazelnut oil and said chocolate is undercooled by from about 4°C to about 6°C.

4. A method according to claim 2 or claim 3, wherein said chocolate further comprises milk fat.

5. A method according to claim 4, wherein the melting point of the β polymorph in the chocolate is about 31°C and the chocolate is undercooled to a temperature of from about 25°C to about 27°C prior to subjection to ultrasonic energy.

6. A method according to claim 5, wherein the chocolate mass is undercooled to a temperature of about 27°C prior to subjection to ultrasonic energy.

7. A method according to any one of claims 4 to 6, wherein subsequent to the step of subjection to ultrasonic energy the chocolate is, if necessary, reheated to about 29°C in readiness for further processing.

8. A method according to any one of claims I to 7, wherein said ultrasonic energy is applied to said fat composition in a static condition after pouring into a mold.

9. A method according to any one of claims 1 to 8, wherein the ultrasonic energy is supplied at a frequency of from about 20 kHz to about 2 Mhz.

10. A method according to claim 9, wherein the ultrasonic energy is applied at a frequency of from about 20 kHz to about 100 kHz

11. A method according to any one of claims 1 to 10, wherein said ultrasonic energy comprises pulses of about 2 seconds long at about 30 second intervals.

12. A method according to any one of claims 1 to 11, wherein ultrasonic energy is supplied to the undercooled composition in amounts of from about 8 kJ/kg to about 20 kJ/kg.

13. A method according to any one of claims 1 to 12, wherein the undercooled composition after subjection to ultrasonic energy and containing β polymorph crystals is admixed as a seed material containing seed crystals of said β polymorph with a second body of an edible fat composition.

14. A method according to any one of claims 1 to 13, in which the shelf life of the ultrasonicated edible fat is at least 1 year at room temperature.

15. A method for stabilizing an edible fat-containing confectionery composition containing a fat capable of polymorphic transformation to form a β polymorph comprising undercooling the composition by at least about 4°C and subjecting said composition to ultrasonic energy in amounts effective to nucleate said composition with stable β-polymorph crystals but insufficient to melt such β-polymorph crystals.

16. A method according to claim 15, wherein the composition is undercooled by up to about 11°C.

17. A method according to any one of claims 15 to 17, wherein said energy is applied to said composition in a static condition.

18. A method according to any one of claims 15 to 17, wherein said energy is applied to said composition in a continuous flow condition.

19. A method according to any one of claims 15 to 18, wherein the fat-containing confectionery composition comprises cocoa butter.

20. A method according to claim 19, wherein said composition further comprises hazelnut oil and said composition is undercooled by from about 4°C to about 6°C.

21. A method according to claim 20, wherein said composition further comprises milk fat.

22. A method according to claim 20, wherein the melting point of the β polymorph in the composition is about 31°C and the composition is undercooled to a temperature of from about 25°C to about 27°C prior to subjection to ultrasonic energy.

23. A method according to claim 22, wherein the composition is undercooled to a temperature of about 27°C prior to subjection to ultrasonic energy.

24. A method according to any one of claims 15 to 23, wherein subsequent to the step of subjection to ultrasonic energy the composition is, if necessary, reheated to about 29°C in readiness for further processing.

25. A method according to any one of claims 15 to 24, wherein the ultrasonic energy is supplied at a frequency of from about 20 kHz to about 2 MHZ.

26. A method according to claim 25, wherein the ultrasonic energy is supplied at a frequency of from about 20 kHz to about 100 kHz.

27. A method according to any one of claims 15 to 26, wherein ultrasonic energy is supplied to the undercooled mass in amounts of from about 8 kJ/kg to about 20 kJ/kg.

## Patentansprüche

1. Verfahren zum Beschleunigen der polymorphen Umwandlung einer genießbaren Fettzusammensetzung, die ein Fett enthält, das zu polymorpher Umwandlung in eine β-polymorphe Form fähig ist, das das Unterkühlen genannter Zusammensetzung um mindestens ca. 4 °C und ihr Aussetzen einer Ultraschallenergie für eine Zeitdauer und bei einer Frequenz umfasst, die ausreicht, um Keimbildung von stabilen β-polymorphen Kristallen in genanntem Fett zu induzieren, ohne den Schmelzpunkt der stabilen β-polymorphen Kristalle zu überschreiten.

2. Verfahren nach Anspruch 1, worin genannte genießbare Fettzusammensetzung eine Schokoladenzusammensetzung ist, die Kakaobutter umfasst.

3. Verfahren nach Anspruch 2, worin genannte Schokolade weiter Haselnussöl umfasst und genannte Schokolade um von ca. 4 °C bis ca. 6 °C unterkühlt wird.

4. Verfahren nach Anspruch 2 oder 3, worin genannte Schokolade ferner Milchfett umfasst.

5. Verfahren nach Anspruch 4, worin der Schmelzpunkt der β-polymorphen Form in der Schokolade ca. 31 °C beträgt und die Schokolade vor dem Unterwerfen einer Ultraschallenergie auf eine Temperatur von ca. 25 °C bis ca. 27 °C unterkühlt wird.

6. Verfahren nach Anspruch 5, worin die Schokoladenmasse vor dem Unterwerfen einer Ultraschallenergie auf eine Temperatur von ca. 27 °C unterkühlt wird.

7. Verfahren nach einem der Ansprüche 4 bis 6, worin anschließend an den Schritt des Unterwerfens einer Ultraschallenergie die Schokolade in Bereitschaft auf Weiterverarbeitung gegebenenfalls wieder auf ca. 29 °C erwärmt wird.

8. Verfahren nach einem der Ansprüche 1 bis 7, worin genannte Ultraschallenergie auf genannte Fettzusammensetzung in einem statischem Zustand nach dem Gießen in eine Form aufgebracht wird.

9. Verfahren nach einem der Ansprüche 1 bis 8, worin die Ultraschallenergie bei einer Frequenz von ca. 20 kHz bis ca. 2 MHz zugeführt wird.

10. Verfahren nach Anspruch 9, worin die Ultraschallenergie bei einer Frequenz von ca. 20 kHz bis ca. 100 kHz aufgebracht wird.

11. Verfahren nach einem der Ansprüche 1 bis 10, worin genannte Ultraschallenergie Pulse von ca. 2 Sekunden lang in ca. 30-Sekunden-Intervallen umfasst.

12. Verfahren nach einem der Ansprüche 1 bis 11, worin der unterkühlten Zusammensetzung Ultraschallenergie in Mengen von ca. 8 kJ/kg bis ca. 20 kJ/kg zugeführt wird.

13. Verfahren nach einem der Ansprüche 1 bis 12, worin die unterkühlte Zusammensetzung nach Unterwerfen einer Ultraschallenergie und die β-polymorphe Kristalle enthält, als ein Impfmaterial, das Impfkristalle von genannter β-polymorpher Form enthält, mit einem zweiten Körper einer genießbaren Fettzusammensetzung beigemischt wird.

14. Verfahren nach einem der Ansprüche 1 bis 13, worin die Haltbarkeitsdauer des mit Ultraschall beschallten genießbaren Fettes bei Raumtemperatur mindestens 1 Jahr beträgt.

15. Verfahren zum Stabilisieren einer genießbaren, Fett enthaltenden Süßwarenzusammensetzung, die ein Fett enthält, das zur polymorphen Umwandlung fähig ist, um eine β-polymorphe Form zu bilden, die Unterkühlen der Zusammensetzung um mindestens ca. 4 °C und Unterwerfen genannter Zusammensetzung einer Ultraschallenergie in Mengen umfasst, die zur Bildung von Keimen genannter Zusammensetzung mit stabilen β-polymorphen Kristallen wirksam ist, aber ungenügend ist, um derartige β-polymorphe Kristalle zu schmelzen.

16. Verfahren nach Anspruch 15, worin die Zusammensetzung um bis zu ca. 11 °C unterkühlt wird.

17. Verfahren nach einem der Ansprüche 15 bis 17, worin genannte Energie auf genannte Zusammensetzung in einem statischen Zustand aufgebracht wird.

18. Verfahren nach einem der Ansprüche 15 bis 17, worin genannte Energie auf genannte Zusammensetzung in einem Zustand des kontinuierlichen Flusses aufgebracht wird.

19. Verfahren nach einem der Ansprüche 15 bis 18, worin die Fett enthaltende Süßwarenzusammensetzung Kakaobutter umfasst.

20. Verfahren nach Anspruch 19, worin genannte Zusammensetzung weiter Haselnussöl umfasst und genannte Zusammensetzung um von ca. 4 °C bis ca. 6 °C unterkühlt wird.

21. Verfahren nach Anspruch 20, worin genannte Zusammensetzung ferner Milchfett umfasst.

22. Verfahren nach Anspruch 20, worin der Schmelzpunkt der β-polymorphen Form in der Zusammensetzung ca. 31 °C beträgt und die Zusammensetzung vor dem Unterwerfen einer Ultraschallenergie auf eine Temperatur von ca. 25 °C bis ca. 27 °C unterkühlt wird.

23. Verfahren nach Anspruch 22, worin die Zusammensetzung vor dem Unterwerfen einer Ultraschallenergie auf eine Temperatur von ca. 27 °C unterkühlt wird.

24. Verfahren nach einem der Ansprüche 15 bis 23, worin anschließend an den Schritt des Unterwerfens einer Ultraschallenergie die Zusammensetzung in Bereitschaft auf Weiterverarbeitung gegebenenfalls wieder auf ca. 29°C erwärmt wird.

25. Verfahren nach einem der Ansprüche 15 bis 24, worin die Ultraschallenergie bei einer Frequenz von ca. 20 kHz bis ca. 2 MHz zugeleitet wird.

26. Verfahren nach Anspruch 25, worin die Ultraschallenergie bei einer Frequenz von ca. 20 kHz bis ca. 100 kHz zugeführt wird.

27. Verfahren nach einem der Ansprüche 15 bis 26, worin Ultraschallenergie an die unterkühlte Masse in Mengen von ca. 8 kJ/kg bis ca. 20 kJ/kg zugeführt wird.

## Revendications

1. Méthode d'accélération de la transformation polymorphe d'une composition de matière grasse comestible contenant une matière grasse susceptible de transformation polymorphe en un β-polymorphe, comprenant la surfusion de ladite composition d'au moins 4°C environ et l'exposition de celle-ci à une énergie ultrasonore pour une durée et à une fréquence suffisantes pour induire la nucléation de cristaux β-polymorphes stables dans ladite matière grasse sans dépasser le point de fusion des cristaux β-polymorphes stables.

2. Méthode selon la revendication 1, dans laquelle ladite composition de matière grasse comestible est une composition de chocolat comprenant du beurre de cacao.

3. Méthode selon la revendication 2, dans laquelle ledit chocolat comprend en outre de l'huile de noisette et ledit chocolat est surfondu d'environ 4°C à environ 6°C.

4. Méthode selon la revendication 2 ou la revendication 3, dans laquelle ledit chocolat comprend en outre de la matière grasse du lait.

5. Méthode selon la revendication 4, dans laquelle le point de fusion du β-polymorphe dans le chocolat est d'environ 31°C et le chocolat est surfondu jusqu'à une température d'environ 25°C à environ 27°C préalablement à la soumission à de l'énergie ultrasonore.

6. Méthode selon la revendication 5, dans laquelle la masse de chocolat est surfondue jusqu'à une température d'environ 27°C préalablement à la soumission à de l'énergie ultrasonore.

7. Méthode selon l'une quelconque des revendications 4 à 6, dans laquelle ultérieurement à l'étape de soumission à de l'énergie ultrasonore, le chocolat est, le cas échéant, chauffé de nouveau jusqu'à environ 29°C pour être prêt à un traitement ultérieur.

8. Méthode selon l'une quelconque des revendications 1 à 7, dans laquelle ladite énergie ultrasonore est appliquée à ladite composition de matière grasse en condition statique après versement dans un moule.

9. Méthode selon l'une quelconque des revendications 1 à 8, dans laquelle l'énergie ultrasonore est fournie à une fréquence d'environ 20 kHz à environ 2 MHz.

10. Méthode selon la revendication 9, dans -laquelle l'énergie ultrasonore est appliquée à une fréquence d'environ 20 kHz à environ 100 kHz.

11. Méthode selon l'une quelconque des revendications 1 à 10, dans laquelle ladite énergie ultrasonore comprend des impulsions d'une durée d'environ 2 secondes à des intervalles d'environ 30 secondes.

12. Méthode selon l'une quelconque des revendications 1 à 11, dans laquelle l'énergie ultrasonore est fournie à la composition en surfusion en des quantités d'environ 8 kJ/kg à environ 20 kJ/kg.

13. Méthode selon l'une quelconque des revendications 1 à 12, dans laquelle la composition en surfusion, après soumission à l'énergie ultrasonore et contenant des cristaux β-polymorphes, est mélangée comme matériau de germes contenant des germes cristallins dudit β-polymorphe avec un deuxième corps d'une composition de matière grasse comestible.

14. Méthode selon l'une quelconque des revendications 1 à 13, dans laquelle la durée de conservation de la matière grasse comestible traitée aux ultrasons est d'au moins 1 an à température ambiante.

15. Méthode de stabilisation d'une composition de confiserie contenant une matière grasse comestible, contenant une matière grasse susceptible de transformation polymorphe pour former un β-polymorphe, comprenant la surfusion de la composition d'au moins 4°C environ et la soumission de ladite composition à une énergie ultrasonore en des quantités efficaces pour la nucléation de ladite composition avec des cristaux β-polymorphes stables, mais insuffisante pour faire fondre de tels cristaux β-polymorphes.

16. Méthode selon la revendication 15, dans laquelle la composition est surfondue de jusqu'à d'environ 11°C.

17. Méthode selon l'une quelconque des revendications 15 à 17, dans laquelle ladite énergie est appliquée à ladite composition en condition statique.

18. Méthode selon l'une quelconque des revendications 15 à 17, dans laquelle ladite énergie est appliquée à ladite composition en condition d'écoulement continu.

19. Méthode selon l'une quelconque des revendications 15 à 18, dans laquelle la composition de confiserie contenant de la matière grasse comprend du beurre de cacao.

20. Méthode selon la revendication 19, dans laquelle ladite composition comprend en outre de l'huile de noisette et ladite composition est surfondue d'environ 4°C à environ 6°C.

21. Méthode selon la revendication 20, dans laquelle ladite composition comprend en outre de la matière grasse du lait.

22. Méthode selon la revendication 20, dans laquelle le point de fusion du β-polymorphe dans la composition est d'environ 31°C et la composition est surfondue jusqu'à une température d'environ 25°C à environ 27°C préalablement à la soumission à l'énergie ultrasonore.

23. Méthode selon la revendication 22, dans laquelle la composition est surfondue jusqu'à une température d'environ 27°C préalablement à la soumission à l'énergie ultrasonore.

24. Méthode selon l'une quelconque des revendications 15 à 23, dans laquelle, ultérieurement à l'étape de soumission à de l'énergie ultrasonore, la composition est, le cas échéant, chauffée de nouveau jusqu'à environ 29°C pour être prête à un traitement ultérieur.

25. Méthode selon l'une quelconque des revendications 15 à 24, dans laquelle l'énergie ultrasonore est fournie à une fréquence d'environ 20 kHz à environ 2 MHz.

26. Méthode selon la revendication 25, dans laquelle l'énergie ultrasonore est fournie à une fréquence d'environ 20 kHz à environ 100 kHz.

27. Méthode selon l'une quelconque des revendications 15 à 26, dans laquelle l'énergie ultrasonore est fournie à la masse en surfusion en des quantités d'environ 8 kJ/kg à environ 20 kJ/kg.
